# DEMANDE DE BREVET EUROPEEN

(11) **EP 1 522 929 A2**
(43) Date de publication de la demande: **13.04.2005**
(21) Numéro de dépôt: 04292398.7
(22) Date de dépôt: 08.10.2004
(51) Int. Cl.: G06F 15/02, H01H 13/70, G06F 3/02

(54) **Calculateur personnel**

(30) Priorité: 10.10.2003 FR 0311914
(71) Demandeur: Chemla, Alain Henri Bernard, 75008 Paris (FR)
(72) Inventeur: Chemla, Alain Henri Bernard, 75008 Paris (FR)
(74) Mandataire: Blot, Philippe Robert Emile

(57) **Abrégé**

Le calculateur personnel (10) comporte un clavier (14) de saisie d'opérations de calcul à effectuer comprenant plusieurs touches (20, 22, 24, 26), un écran d'affichage (16) et une unité centrale (18) de traitement d'informations reliée au clavier (14) et à l'écran d'affichage (16). L'unité de traitement d'informations (18) est propre à commander l'affichage sur l'écran (16) des résultats d'opérations saisies depuis le clavier (14). Il comporte des moyens d'éclairage du calculateur et une unité de pilotage propre à piloter les moyens d'éclairage suivant au moins deux état différenciés en fonction des opérations de calcul saisies par l'opérateur.

## Description

La présente invention concerne un calculateur personnel du type comportant un clavier de saisie d'opérations de calcul à effectuer comprenant plusieurs touches, un écran d'affichage et une unité centrale de traitement d'informations reliée au clavier et à l'écran d'affichage, laquelle unité de traitement d'informations est propre à commander l'affichage sur l'écran des résultats d'opérations saisies depuis le clavier.

Les calculateurs personnels tels que les calculettes portatives ou les calculettes de bureau utilisées par les comptables comportent un clavier formé d'un ensemble de touches numériques, de touches d'opérateurs mathématiques, et de touches fonctionnelles, telles qu'une touche de remise à zéro, ou une touche mémoire. Ces touches sont marquées chacune d'une inscription afin de les distinguer et de connaître leur fonction. Le calculateur comporte en outre un écran d'affichage sur lequel apparaît en caractères monochromes les nombres saisis depuis le clavier, ainsi que le résultat de l'opération de calcul effectuée par le calculateur.

Un tel calculateur fonctionne de manière tout à fait satisfaisante mais l'opérateur utilisant le calculateur doit être vigilent quant aux touches qu'il actionne et dans l'interprétation du résultat affiché par l'écran. En effet, aucune aide ne lui est apportée par le calculateur.

L'invention a pour but de proposer un calculateur personnel dont l'utilisation est facilitée.

A cet effet, l'invention a pour objet un calculateur personnel du type précité, caractérisé en ce qu'il comporte des moyens d'éclairage du calculateur et une unité de pilotage propre à piloter les moyens d'éclairage suivant au moins deux états différenciés en fonction des opérations de calcul saisies par l'opérateur.

Suivant des modes particuliers de réalisation, le calculateur comporte l'une ou plusieurs des caractéristiques suivantes :
- lesdits moyens d'éclairage comportent des sources lumineuses associées à chaque touche du clavier et l'unité de pilotage est propre à assurer un pilotage sélectif des sources lumineuses en fonction des opérations de calcul saisies par l'opérateur ;
- le clavier comporte des touches numériques et des touches d'opérateurs mathématiques, et les sources lumineuses associées respectivement aux touches numériques et aux touches d'opérateurs mathématiques sont de couleurs différentes ;
- l'unité de pilotage est adaptée pour, lors de l'enfoncement d'une touche, assurer l'illumination de la source lumineuse associée à la touche enfoncée suivant un mode d'illumination particulier pendant une durée prédéterminée ;
- l'unité centrale de traitement d'informations comporte des moyens de détection d'une erreur de définition d'un calcul à effectuer, et les moyens de pilotage sont adaptés pour assurer un clignotement d'au moins une source lumineuse associée à au moins une touche du clavier, en cas de détection d'une telle erreur ;
- les moyens d'éclairage comportent deux sources lumineuses associées à l'écran pour son illumination suivant deux états différenciés, et l'unité de pilotage est propre à assurer une illumination de l'écran suivant l'un de ces deux états différenciés, en fonction d'une caractéristique de l'information affichée sur l'écran ;
- l'unité de pilotage est adaptée pour, lors de l'affichage d'un nombre sur l'écran, assurer une illumination de l'écran suivant l'un de ces deux états différenciés en fonction du signe du nombre affiché sur l'écran ; et
- les deux sources lumineuses sont de couleurs différentes, l'écran étant adapté pour afficher des nombres et symboles d'une même couleur, et les sources lumineuses sont adaptées pour permettre une illumination du fond de l'écran avec la couleur de l'une ou l'autre des sources lumineuses.

L'invention sera mieux comprise à la lecture de la description qui va suivre, donnée uniquement à titre d'exemple et faite en se référant aux dessins, sur lesquels :

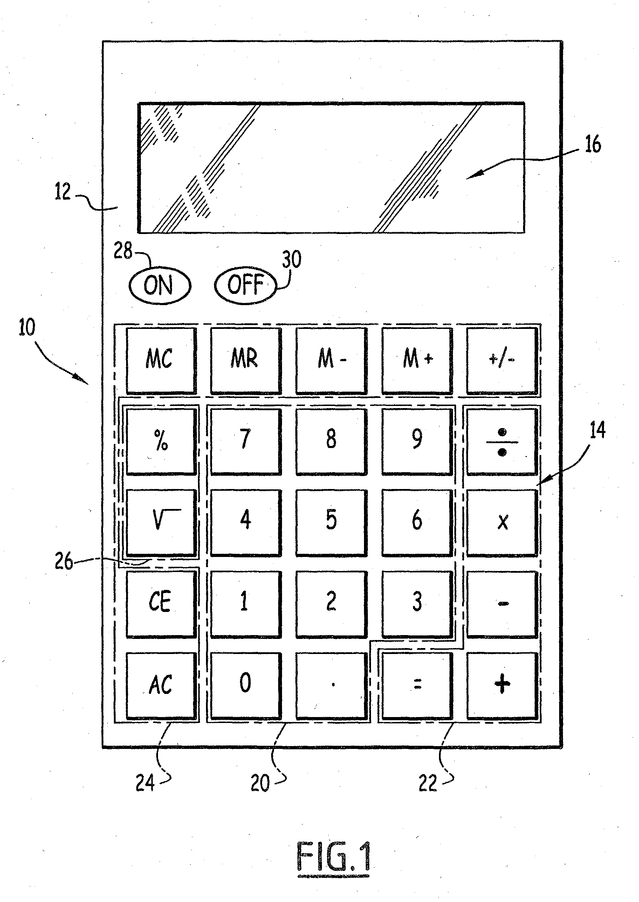

- la figure 1 est une vue en élévation d'un calculateur personnel selon l'invention ; et
- la figure 2 est une vue en élévation du calculateur de la figure 1, la face avant ayant été retirée.

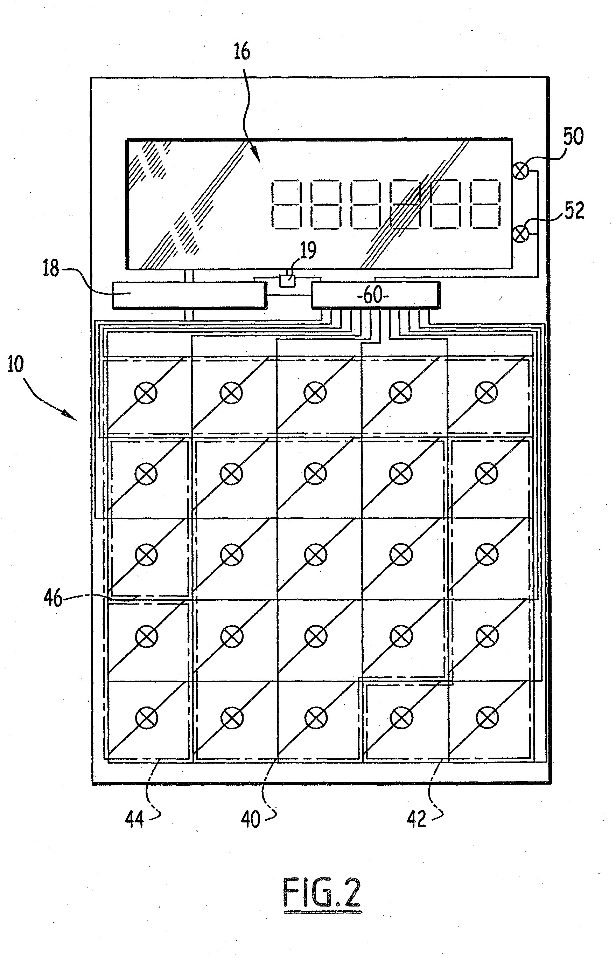

Le calculateur 10 selon l'invention comporte essentiellement un boîtier 12 portant, sur sa face avant, un clavier 14 et un écran 16. L'écran 16 est par exemple un écran à cristaux liquides. Le clavier et l'écran sont reliés à une unité centrale de traitement d'informations 18 visible sur la figure 2. L'écran 16 et l'unité centrale 18 sont alimentées depuis une batterie 19.

Comme connu en soi, l'unité centrale de traitement d'informations comporte des moyens de recueil d'informations issues du clavier et est adaptée pour effectuer les calculs correspondant aux opérations de calcul saisies depuis le clavier. L'unité centrale de traitement d'informations 18 comporte en outre des moyens de pilotage de l'écran 16 pour permettre l'affichage des nombres entrés depuis le clavier, ainsi que l'affichage des résultats des calculs effectués.

Le clavier 14 comporte onze touches numériques 20 correspondant aux dix chiffres de 0 à 9 et à la virgule. Il comporte en outre cinq touches 22 correspondant aux quatre opérateurs mathématiques +, -, x et : ainsi qu'une touche =. Il comporte de plus un ensemble de touches fonctionnelles 24 telles qu'une touche de remise à zéro et des touches de mémorisation. Il comporte enfin des touches 26 de fonctions complexes telles qu'une touche de pourcentage et une touche de fonction permettant d'extraire la racine carrée d'un nombre.

Enfin, le clavier présente une touche 28 marquée "on" permettant la mise en route du calculateur et une touche 30 marquée "off" permettant son extinction.

Selon l'invention, le calculateur comporte des moyens d'éclairage du calculateur suivant au moins deux états d'éclairage différenciés en fonction des opérations de calcul saisies par l'opérateur.

Ces moyens d'éclairage comportent notamment, associée à chaque touche du clavier, une diode électroluminescente.

Plus précisément, et comme illustré sur la figure 2, une matrice de diodes électroluminescentes est disposée au-dessous du clavier 16, une diode étant associée à chaque touche et étant disposée immédiatement en arrière de cette touche.

Pour permettre que la lumière produite par la diode soit visible, chaque touche est par exemple transparente, ce qui permet qu'elle soit ainsi rétro-éclairée par la diode associée.

En variante, chaque touche est opaque et ne présente qu'un motif dépoli permettant le passage de la lumière. Suivant encore une autre variante, chaque touche est bordée d'un cadre transparent ménagé dans le boîtier 12 permettant l'illumination du pourtour de la touche correspondante depuis la diode sous-jacente associée.

De préférence, les diodes associées à chaque type de touche sont de couleurs différentes. Par exemple, un premier ensemble de diodes électroluminescentes 40 de couleur rouge est disposé au-dessous des touches numériques 20. Des diodes électroluminescentes bleues 42 sont disposées au-dessous des touches d'opérateurs mathématiques 48, des diodes électroluminescentes jaunes 44 étant disposées au-dessous des touches de fonction 24 et des diodes électroluminescentes oranges 46 étant placées au-dessous des touches 26 de fonctions complexes. Les touches 28 et 30 sont également éclairées par des diodes électroluminescentes non représentées.

Par ailleurs, deux diodes de couleurs différentes 50, 52 d'illumination du fond de l'écran 16 sont disposées au voisinage immédiat de l'écran. La diode 50 est par exemple de couleur verte alors que la diode 52 est de couleur rouge.

Ces diodes sont disposées de telle sorte qu'elles soient susceptibles d'assurer un rétro-éclairage de l'écran 16.

Le calculateur comporte en outre une unité 60 de pilotage des diodes. L'unité 60 est reliée à l'unité centrale de traitement d'informations 18 et à la batterie 19 d'alimentation du calculateur. Cette unité 60 permet l'alimentation ou non de chaque diode individuellement en fonction d'informations reçues de l'unité centrale de traitement d'informations 18.

A cet effet, l'unité centrale de traitement d'informations 18 est reliée à l'unité de pilotage 60 par une liaison de transmission d'informations permettant de communiquer, à l'unité de pilotage, la touche du clavier qui vient d'être enfoncée, le résultat d'une opération effectuée par le calculateur, ou un état d'erreur.

L'unité de pilotage 60 est programmée pour assurer l'alimentation sélective de chacune des diodes en fonction d'un algorithme prédéterminé, et ce en fonction d'informations issues de l'unité centrale de traitement d'informations.

En particulier, l'unité 60 est adaptée pour provoquer l'illumination temporaire de la diode électroluminescente associée à chaque touche enfoncée pour l'opérateur. Cette illumination a lieu par exemple pendant une durée d'une demi-seconde.

Ainsi, lors de l'enfoncement d'une touche, celle-ci s'illumine de la couleur de la diode associée pendant une demi-seconde.

Par ailleurs, l'unité de pilotage 60 assure l'illumination de la diode verte 50 ou de la diode rouge 52 en fonction du signe du nombre affiché sur l'écran 16. Ainsi, si le nombre est positif, c'est-à-dire supérieur à 0, la diode verte est allumée, de sorte que le nombre apparaît sur fond vert. Au contraire, si le nombre est négatif, c'est-à-dire inférieur à 0, la diode rouge est allumée, de sorte que ce nombre apparaît sur fond rouge sur l'écran 16.

En outre, l'unité de pilotage 16 assure, lors de la détection d'une erreur de calcul par l'unité de traitement d'informations 18, le clignotement simultané de toutes les touches du clavier pour une durée prédéterminée, par exemple égale à 2 secondes. Pour ce faire, l'ensemble des diodes 42 à 46 sont allumées et éteintes successivement à une fréquence rapide.

Tel est le cas par exemple lorsque la touche d'extraction d'une racine carrée est enfoncée alors que le chiffre figurant sur l'écran est négatif.

On comprend que l'usage de moyens d'éclairage permettant que le calculateur soit amené dans plusieurs états d'éclairage différenciés permet à l'opérateur de déterminer le type d'opération qu'il est en train d'effectuer. En effet, chaque fois que l'opérateur appuie sur une touche numérique ou sur une touche d'opérateur mathématique, une lumière éclaire la touche qu'il vient d'enfoncer d'une couleur représentative de la nature de la touche. Ainsi, même sans que l'opérateur n'ait besoin d'identifier précisément la touche qu'ii vient d'enfoncer, il est à même de déterminer le type de touche qu'il vient d'enfoncer, ce qui est généralement suffisant pour détecter une éventuelle erreur.

De même, l'éclairage de l'écran d'une couleur dépendant du signe du résultat de l'opération permet à l'opérateur d'avoir rapidement une idée de ce résultat, sans pour autant prendre connaissance du résultat exact affiché sur l'écran.

Ainsi, les différents états d'éclairage du calculateur permettent de faciliter son utilisation.

En variante, les touches du calculateur sont en permanence toutes éclairées et la touche qui vient d'être enfoncée est temporairement éclairée avec une intensité plus importante. Pour ce faire, l'unité de pilotage 60 assure une différence de potentiel plus élevée aux bornes de la diode électroluminescente associée à la touche qui vient d'être enfoncée.

L'invention s'applique à tout type de calculateurs qu'ils soient ou non équipés d'une imprimante intégrée. Ces calculateurs peuvent être des dispositifs de petite taille tenant dans une poche ou de taille plus importante destinés à être posés sur un bureau.

## Revendications

1. Calculateur personnel (10) comportant un clavier (14) de saisie d'opérations de calcul à effectuer comprenant plusieurs touches (20, 22, 24, 26), un écran d'affichage (16) et une unité centrale (18) de traitement d'informations reliée au clavier (14) et à l'écran d'affichage (16), laquelle unité de traitement d'informations (18) est propre à commander l'affichage sur l'écran (16) des résultats d'opérations saisies depuis le clavier (14), **caractérisé en ce qu'**il comporte des moyens (40, 42, 44, 46, 50, 52) d'éclairage du calculateur et une unité de pilotage (60) propre à piloter les moyens d'éclairage suivant au moins deux états différenciés en fonction des opérations de calcul saisies par l'opérateur.

2. Calculateur selon la revendication 1, **caractérisé en ce que** lesdits moyens d'éclairage comportent des sources lumineuses (40, 42, 44, 46) associées à chaque touche (20, 22, 24, 26) du clavier et l'unité de pilotage (60) est propre à assurer un pilotage sélectif des sources lumineuses en fonction des opérations de calcul saisies par l'opérateur.

3. Calculateur selon la revendication 2, **caractérisé en ce que** le clavier (14) comporte des touches numériques (20) et des touches d'opérateurs mathématiques (22), et **en ce que** les sources lumineuses (40, 42) associées respectivement aux touches numériques (20) et aux touches d'opérateurs mathématiques (22) sont de couleurs différentes.

4. Calculateur selon la revendication 2 ou 3, **caractérisé en ce que** l'unité de pilotage (60) est adaptée pour, lors de l'enfoncement d'une touche, assurer l'illumination de la source lumineuse associée à la touche enfoncée suivant un mode d'illumination particulier pendant une durée prédéterminée.

5. Calculateur personnel selon l'une quelconque des revendications 2 à 4, **caractérisé en ce que** l'unité centrale de traitement d'informations (18) comporte des moyens de détection d'une erreur de définition d'un calcul à effectuer, et **en ce que** les moyens de pilotage (60) sont adaptés pour assurer un clignotement d'au moins une source lumineuse (40, 42, 44, 46) associée à au moins une touche (20, 22, 24, 26) du clavier, en cas de détection d'une telle erreur.

6. Calculateur selon l'une quelconque des revendications précédentes, **caractérisé en ce que** les moyens d'éclairage comportent deux sources lumineuses (50, 52) associées à l'écran (16) pour son illumination suivant deux états différenciés, et **en ce que** l'unité de pilotage (60) est propre à assurer une illumination de l'écran (16) suivant l'un de ces deux états différenciés, en fonction d'une caractéristique de l'information affichée sur l'écran.

7. Calculateur personnel selon la revendication 6, **caractérisé en ce que** l'unité de pilotage (60) est adaptée pour, lors de l'affichage d'un nombre sur l'écran (16), assurer une illumination de l'écran suivant l'un de ces deux états différenciés en fonction du signe du nombre affiché sur l'écran.

8. Calculateur personnel selon la revendication 6 ou 7, **caractérisé en ce que** les deux sources lumineuses (50, 52) sont de couleurs différentes, l'écran étant adapté pour afficher des nombres et symboles d'une même couleur, et **en ce que** les sources lumineuses sont adaptées pour permettre une illumination du fond de l'écran avec la couleur de l'une ou l'autre des sources lumineuses.
